Europäisches Patentamt

European Patent Office

Office européen des brevets

(19)

(11) EP 1 722 314 A1

(12) **EUROPEAN PATENT APPLICATION**

| | |
|---|---|
| (43) Date of publication:<br>**15.11.2006 Bulletin 2006/46** | (51) Int Cl.:<br>***G06K 7/00*** (2006.01) |

(21) Application number: **05107633.9**

(22) Date of filing: **19.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.05.2005 KR 2005388375**

(71) Applicant: **ELECTRONICS AND TELECOMMUNICATIONS RESEARCH INSTITUTE**
**Daejeon-shi (KR)**

(72) Inventors:
• **Park, Kyung Hwan**
  **Daejeon-city (KR)**
• **Park, Seong Su**
  **Daejeon-city (KR)**

(74) Representative: **Esslinger, Alexander et al**
**Betten & Resch**
**Patentanwälte**
**Theatinerstrasse 8**
**80333 München (DE)**

(54) **Receiver of RFID reader for eliminating leakage signal**

(57)    Provided is a receiver of a passive radio frequency identification (RFID) reader, which eliminates a leakage signal from a reception signal comprised of a RFID tag response signal and the leakage signal. The receiver includes a phase adjustment unit adjusting a local oscillation signal received from a frequency synthesizer to have a phase difference of a predetermined angle from the leakage signal. Since the phase adjustment unit adjusts the phase difference, the leakage signal input to the receiver of the RFID reader can be eliminated. Consequently, the performance of the receiver can be enhanced.

FIG. 3

EP 1 722 314 A1

**Description**

BACKGROUND OF THE INVENTION

This application claims the priority of Korean Patent Application No. 10-2005-0038375, filed on May 9, 2005, in the Korean Intellectual Property Office, the disclosure of which is incorporated herein in its entirety by reference.

1. Field of the Invention

The present invention relates to a receiver of a radio frequency identification (RFID) reader, which eliminates a leakage signal, and more particularly, to a receiver of a passive RFID reader, which mixes a local oscillation signal having a phase difference of a predetermined angle from a leakage signal with a reception signal, and thus eliminates the leakage signal from the reception signal.

2. Description of the Related Art

A conventional fixed radio frequency identification (RFID) reader includes a transmitting antenna and a receiving antenna. Therefore, a receiver of the conventional fixed RFID reader receives a signal reflected from an RFID tag via the receiving antenna.

A conventional portable-terminal-type reader uses an antenna for both transmission and reception. To separate transmission from reception, the conventional portable-terminal-type reader having the antenna for both transmission and reception uses frequency, time, and code division methods.

A passive RFID reader simultaneously transmits and receives signals at a same frequency and uses a directional division method. In other words, a directional coupler separates a transmission signal sent from a transmitter of the passive RFID reader to an antenna, and a reception signal sent from the antenna to a receiver of the passive RFID reader.

However, since the directional coupler cannot completely separate transmission from reception, some of a plurality of transmission signals leak to the receiver of the passive RFID reader. Therefore, a circuit for preventing transmission signals from being input to the receiver of the passive RFID reader is required.

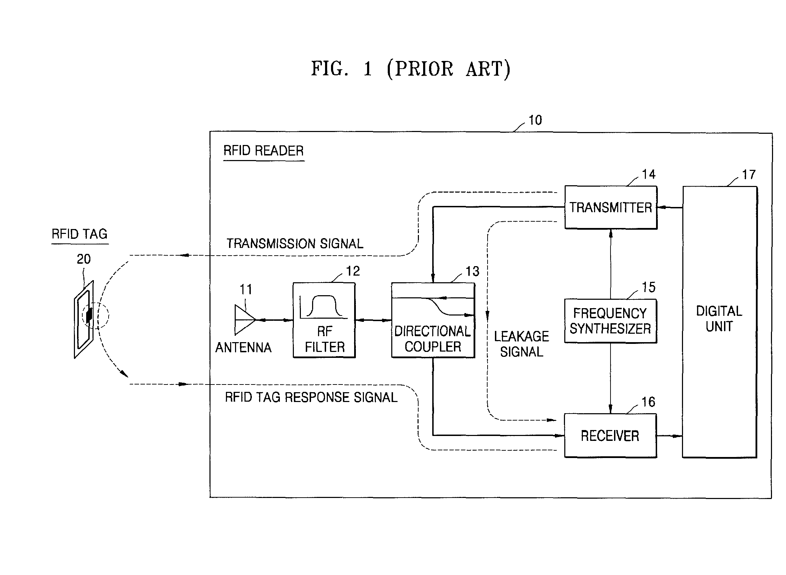

FIG. 1 illustrates a schematic configuration of a conventional passive RFID system. Referring to FIG. 1, the passive RFID system includes an RFID reader 10 and an RFID tag 20. When the RFID reader 10 transmits a signal to the RFID tag 20, the RFID tag 20 transmits a response signal to the RFID reader 10.

The RFID reader 10 includes an antenna 11, an RF filter 12, a directional coupler 13, a transmitter 14, a frequency synthesizer 15, a receiver 16, and a digital unit 17.

According to communication rules for passive RFID systems, when receiving a baseband signal from the digital unit 17, the transmitter 14 of the RFID reader 10 is required to transmit a modulation signal and a continuous-wave signal in turn.

When the RFID reader 10 transmits a modulation signal to the RFID tag 20, the RFID tag 20 receives the modulation signal but does not transmit a response signal. Thus, the RFID reader 10 receives no signal. On the other hand, when the RFID reader 10 transmits a continuous-wave signal to the RFID tag 20, the RFID tag receives the continuous-wave signal and transmits a response signal to the RFID reader 10. Thus, the receiver 16 of the RFID reader 10 should process the received response signal.

The RFID tag 20 absorbs some of a plurality of continuous-wave signals transmitted from the RFID reader 10 and reflects some of them. Such reflected signals are response signals from the RFID tag 20. By changing reflection rates, information is included in the response signals. While transmitting the continuous-wave signals, the RFID reader 10 also receives signals. Hence, the RFID reader 10 uses the same frequency to transmit and receive signals.

The transmitter 14 generates continuous-wave signals and transmits the continuous-wave signals to the directional coupler 13. Of the continuous-wave signals that are transmitted the directional coupler 13, some are diverted to the receiver 16, and the remainder is transmitted to the RFID tag 20 via the RF filter 12 and the antenna 11.

Since the RFID reader 10 uses only one antenna for both transmission and reception, it separates transmission from reception using the directional coupler 13. In other words, transmission signals are directed by the directional coupler 13 only to the antenna 11. However, since the directional coupler 13 cannot copletely separate transmission from reception, some of the transmission signals leak to the receiver 16.

The receiver 16 receives both leakage signals from the transmitter 14 and RFID tag response signals from the RFID tag 20. Therefore, it is difficult for the receiver 16 to restore only the RFID tag response signals.

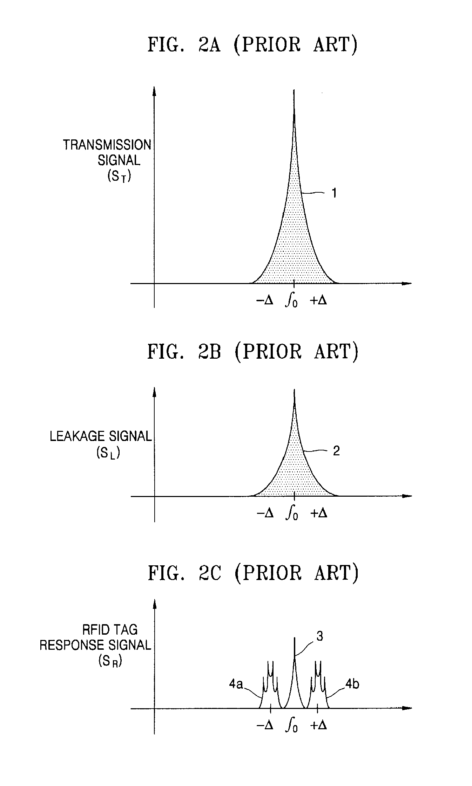

FIGS. 2A through 2F illustrate signal spectrums of the passive RFID system of FIG. 1. Specifically, FIG. 2A illustrates a spectrum 1 of a transmission signal $S_T$ transmitted from the transmitter 14 of the passive RFID system of FIG. 1. FIG. 2B illustrates a spectrum 2 of a leakage signal $S_L$ leaked to the receiver 16 from the transmitter 14 of the passive RFID system of FIG. 1. FIG. 2C illustrates a spectrum of an RFID tag response signal $S_R$ transmitted from the RFID tag 20 of the passive RFID system of FIG. 1. The RFID tag response signal $S_R$ is composed of a carrier component 3 and modulation components 4a and 4b containing RFID tag information.

FIG. 2D illustrates a spectrum of a synthesized signal obtained after the leakage signal $S_L$ of FIG. 2B is combined with the RFID tag response signal $S_R$ of FIG. 2C in the receiver 16 of the passive RFID system of FIG. 1. The RFID reader 10 should extract only the modulation components 4a and 4b. However, since a plurality of leakage signals $S_{Ls}$ are input to the receiver 16, a carrier component 5 of a reception signal including the leakage signal $S_L$ and the RFID tag response signal $S_R$ increases. Therefore, it is difficult to extract only the modulation components 4a and 4b due to an aliasing phenomenon in which spectrums of the carrier component 5 and the modulation components 4a and 4b overlap.

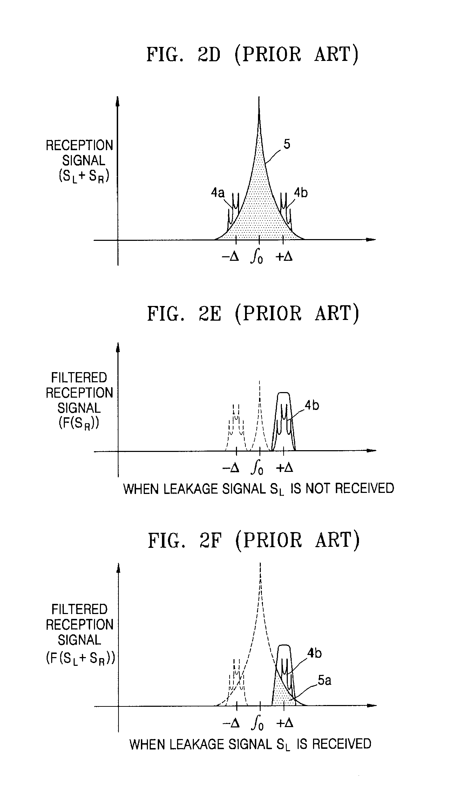

FIG. 2E illustrates a spectrum of a signal generated after the receiver 16 of the passive RFID system of FIG. 1 filters the RFID tag response signal $S_R$ when no leakage signal $S_L$ is received. FIG. 2F illustrates a spectrum of a signal generated after the receiver 16 of the passive RFID system of FIG. 1 filters the RFID tag response signal $S_R$ and the leakage signal $S_L$ when the leakage signal $S_L$ is received together with the RFID tag response signal $S_R$.

If FIG. 2E is compared with FIG. 2F, when there is no leakage signal component 5a, it is possible to extract only the modulation component 4b after the receiver 16 filters the RFID tag response signal $S_R$. However, with the leakage signal component 5a present, it is not possible to extract only the modulation component 4b even after the receiver 16 filters the RFID tag response signal $S_R$ and the leakage signal $S_L$ since the modulation component 4b is mixed with the leakage signal component 5a.

SUMMARY OF THE INVENTION

The present invention provides a receiver of a radio frequency identification (RFID) reader, which precisely adjusts a local oscillation signal input to a frequency downward mixer included in the receiver to have a phase difference of 0, 45, or 90 degrees from a leakage signal, thereby suppressing the leakage signal in a reception signal.

According to an aspect of the present invention, there is provided a receiver of an RFID reader, which eliminates a leakage signal from a reception signal comprised of a RFID tag response signal and the leakage signal. The receiver includes: a phase adjustment unit adjusting a local oscillation signal received from a frequency synthesizer to have a phase difference of a predetermined angle from the leakage signal; a phase displacement unit comprising an I displacer and a quadrature (Q) displacer generating an in-phase (I-phase) signal and a Q-phase signal having a phase difference of 90 degrees from the phase-adjusted local oscillation signal, respectively; a frequency downward mixing unit comprising a first frequency downward mixer frequency-downward-mixing the I-phase signal generated by the I displacer with the reception signal and a second frequency downward mixer frequency-downward-mixing the Q-phase signal generated by the Q displacer with the reception signal; and a filtering unit comprising a first filter filtering a signal received from the first frequency downward mixer and eliminating the leakage signal from the reception signal and a second filter filtering a signal received from the second frequency downward mixer and eliminating the leakage signal from the reception signal.

The receiver may further include a switch unit determining whether to transmit the reception signal to the frequency downward mixing unit directly or via a low noise amplifier according to a control signal generated based on an intensity of the reception signal.

The receiver may further include a digital unit generating a control signal for controlling the reception signal to be transmitted directly to the frequency downward mixing unit and transmitting the control signal to the switch unit if the intensity of the reception signal is greater than the predetermined level and generating a control signal for controlling the reception signal to be transmitted to the low frequency amplifier and transmitting the control signal to the switch unit if the intensity of the reception signal is less than the predetermined level.

The phase adjustment unit may adjust the local oscillation signal to have a phase difference of 0 or 180 degrees from the leakage signal.

The phase adjustment unit may adjust the local oscillation signal to have a phase difference of -90 or 90 degrees from the leakage signal.

The phase adjustment unit may adjust the local oscillation signal to have a phase difference of 45 or 135 degrees from the leakage signal.

BRIEF DESCRIPTION OF THE DRAWINGS

The above and other features and advantages of the present invention will become more apparent by describing in detail exemplary embodiments thereof with reference to the attached drawings in which:

FIG. 1 illustrates a schematic configuration of a conventional radio frequency identification (RFID) system;
FIGS. 2A through 2F illustrate signal spectrums of the RFID system of FIG. 1; and
FIG. 3 illustrates the configuration of an RFID reader for eliminating leakage signals according to an embodiment of the present invention.

DETAILED DESCRIPTION OF THE INVENTION

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

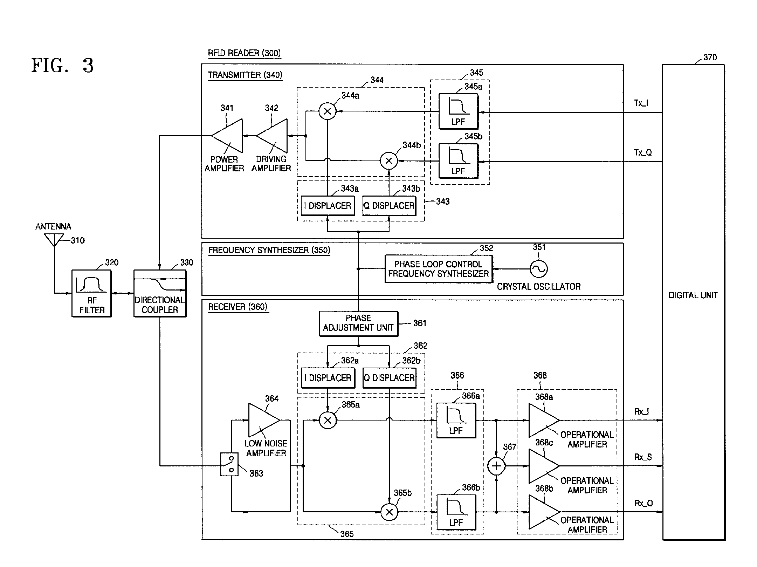

FIG. 3 illustrates the configuration of a radio frequency identification (RFID) reader 300 for eliminating leakage signals according to an embodiment of the present invention. Referring to FIG. 3, the RFID reader 300 includes an antenna 310, an RF filter 320, a directional coupler 330, a transmitter 340, a frequency synthesizer 350, a receiver 360, and a digital unit 370. The RFID reader 300 is a passive RFID reader.

The transmitter 340 includes a power amplifier 341, a driving amplifier 342, a displacement unit 343, a frequency upward mixing unit 344, and a filtering unit 345. The transmitter 340 receives baseband signals Tx_I and Tx_Q from the digital unit 370. The baseband signals Tx_I and Tx_Q pass through the filtering unit 345, the frequency upward mixing unit 344, the driving amplifier 342 and the power amplifier 341, and are output to a directional coupler 330 as radio frequency (RF) signals.

The displacement unit 343 includes an I displacer 343a and a Q displacer 343b. The frequency upward mixing unit 344 includes a first frequency upward mixer 344a and a second frequency upward mixer 344b. The filtering unit 345 includes a first filter 345a and a second filter 345b.

The I displacer 343a generates an in-phase (I-phase) signal having a 0 degree phase difference from a local oscillation (LO) signal received from the frequency synthesizer 350 and transmits the I-phase signal to the first frequency upward mixer 344a, and the Q displacer 343b generates a Q-phase signal having a 90 degree phase difference from the LO signal received from the frequency synthesizer 350 and transmits the Q-phase signal to the second frequency upward mixer 344b.

The frequency upward mixing unit 344 includes the first frequency upward mixer 344a and the second frequency upward mixer 344b. The first frequency upward mixer 344a mixes the baseband signal Tx_I from the first filter 345a with an LO signal from the I displacer 343a, and the second frequency upward mixer 344b mixes the baseband signal Tx_Q from the second filter 345b with an LO signal from the Q displacer 343b.

The frequency synthesizer 350 synthesizes a desired high-frequency signal and provides LO signals to the transmitter 340 and the receiver 360. The frequency synthesizer 350 includes a crystal oscillator 351 and a phase loop control frequency synthesizer 352.

The crystal oscillator 351 outputs a stable frequency, and the phase loop control frequency synthesizer 352 tunes its phase to an output signal from the crystal oscillator 351 and synthesizes a desired high-frequency signal with the output signal. Since the phase loop control frequency synthesizer 352 tunes its phase to the output signal from the crystal oscillator 351, it is used to obtain a stable high-frequency signal having few frequency oscillations.

The receiver 360 includes a phase adjustment unit 361, a displacement unit 362, a switch unit 363, a low noise amplifier 364, a frequency downward mixing unit 365, a filtering unit 366, a signal mixing unit 367, and an operational amplifier 368.

The receiver 360 outputs baseband signals Rx_I, RX_S, and Rx_Q via the frequency downward mixing unit 365, the filtering unit 366, the operational amplifier 368, and the digital unit 370 therein. The directional coupler 330 diverts a reception signal composed of an RFID tag response signal and a leakage signal to the receiver 360.

The reception signal may be transmitted from the directional coupler 330 to the frequency downward mixing unit 365 directly or via the low noise amplifier 364. The switch unit 363 determines whether to transmit the reception signal to the frequency downward mixing unit 365 directly or via the low noise amplifier 364 according to a control signal transmitted from the digital unit 370 based on an intensity of the reception signal.

In other words, if the intensity of the reception signal is greater than a predetermined level, the reception signal is transmitted directly to the frequency downward mixing unit 365. If the intensity of the reception signal is less than the predetermined level, the reception signal is transmitted to the frequency downward mixing unit 365 via the low noise amplifier 364.

The phase adjustment unit 361 adjusts a phase of an LO signal generated by the frequency synthesizer 350. The phase adjustment unit 361 adjusts the LO signal input to the receiver 360 from the frequency synthesizer 350 to have a phase difference of 0, 45, or 90 degrees from the leakage signal included in the reception signal and transmits the phase-adjusted LO signal to the displacement unit 362.

The displacement unit 362 includes an I displacer 362a and a Q displacer 362b. The I displacer 362a generates an I-phase signal having a 0 degree phase difference from an LO signal received from the phase adjustment unit 361 and transmits the I-phase signal to a first frequency downward mixer 365a, and the Q displacer 362b generates a Q-phase signal having a 90 degree phase difference from an LO signal received from the phase adjustment unit 361 and transmits the Q-phase signal to a second frequency downward mixer 365b.

The frequency downward mixing unit 365 includes the first frequency downward mixer 365a and the second frequency downward mixer 365b. The first frequency downward mixer 365a mixes the reception signal from the directional coupler 330 with the LO signal from the I displacer 362a, and the second frequency downward mixer 365b mixes the reception signal from the directional coupler 330 with the LO signal from the Q displacer 362b.

The filtering unit 366 includes a first filter 366a and a second filter 366b. The first filter 366a filters a frequency-downward-mixed signal from the first frequency downward mixer 365a and eliminates the leakage signal from the reception signal. The second filter 366b filters a frequency-downward-mixed signal from the second frequency downward mixer 365b and eliminates only the leakage signal from the reception signal. In this way, since the filtering unit 366 eliminates the leakage signal from the reception signal, a desired RFID tag response signal can be obtained.

The operational amplifier 368 includes a first operational amplifier 368a, a second operational amplifier 368b, and a third operational amplifier 368c. The first operational amplifier 368a amplifies a filtered signal from the first filter 366a and outputs a baseband signal Rx_I to the digital unit 370. The second operational amplifier 368b amplifies a filtered signal from the second filter 366b and outputs a baseband signal Rx_Q to the digital unit 370. The third operational amplifier 368c amplifies a signal obtained after a signal mixer 367 mixes the filtered signals from the first and second filters 366a and 366b and outputs a baseband signal Rx_S to the digital unit 370.

Hereinafter, the process of removing a leakage signal from a reception signal and obtaining a desired RFID tag response signal using the receiver 360 will be described in detail with reference to equations below.

$S_i(t)$, i.e., a reception signal in the receiver 360 of the RFID reader 300, is defined as

$$S_i(t) = S_L(t) \quad + \quad S_R(t)$$

$$= A(t)\cos(wt + \Phi_1) + B(t)\cos(wt + \Phi_2) \quad \ldots(1),$$

where cos(wt) denotes an LO signal in the transmitter 340 of the RFID reader 300, $S_L(t) = A(t)\cos(wt + \Phi_1)$ denotes a leakage signal leaked from the transmitter 340 of the RFID reader 300, $\Phi_1$ denotes a phase delay value generated by the directional coupler 330 when the leakage signal is input to the receiver 360, $S_R(t) = B(t)\cos(wt + \Phi_2)$ denotes a RFID tag response signal, and $\Phi_2$ denotes a phase delay value generated by a delay in an electromagnetic wave path when the RFID tag response signal is input to the receiver 360.

An LO signal input to the receiver 360 of the RFID reader 300 may be defined in Equations 2 and 3:

$$I(t) = \cos(wt + \delta) \quad \ldots(2),$$

where δ denotes a phase difference between the LO signal in the transmitter 340 of the RFID reader 300 and the LO signal in the receiver 360 of the RFID reader 300.

$$Q(t) = \sin(wt + \delta) \quad \ldots(3),$$

where δ denotes the phase difference between the LO signal in the transmitter 340 of the RFID reader 300 and the LO signal in the receiver 360 of the RFID reader 300.

If the reception signal, i.e., $S_i(t)$, in the receiver 360 of the RFID reader 300 is multiplied by the LO signal in the receiver 360 of the RFID reader 300, an I-phase signal and a Q-phase signal are obtained respectively by

$$S_i(t) \cdot I(t) = [A(t)\cos(wt + \Phi_1) + B(t)\cos(wt + \Phi_2)] \cdot \cos(wt + \delta)$$

$$= A(t)\frac{\cos(2wt + \delta + \Phi_1) + \cos(\delta - \Phi_1)}{2} + B(t)\frac{\cos(2wt + \delta + \Phi_2) + \cos(\delta - \Phi_2)}{2} \quad \ldots(4)$$

$$S_i(t) \cdot Q(t) = [A(t)\cos(wt+\Phi_1)+B(t)\cos(wt+\Phi_2)] \cdot \sin(wt+\delta)$$

$$= A(t)\frac{\sin(2wt+\delta+\Phi_1)+\sin(\delta-\Phi_1)}{2} + B(t)\frac{\sin(2wt+\delta+\Phi_2)+\sin(\delta-\Phi_2)}{2} \quad \dots(5)$$

If the first filter 366a and the second filter 366b low-pass-filter the I-phase signal and the Q-phase signal obtained using Equations 4 and 5, respectively, signals defined by Equations 6 and 7 are obtained.

$$I_{LPF}(t) = \frac{A(t)\cos(\delta-\Phi_1)}{2} + \frac{B(t)\cos(\delta-\Phi_2)}{2} \quad \dots(6)$$

$$Q_{LPF}(t) = \frac{A(t)\sin(\delta-\Phi_1)}{2} + \frac{B(t)\sin(\delta-\Phi_2)}{2} \quad \dots(7)$$

Since the RFID reader 300 uses an amplitude shift keying (ASK) modulation/demodulation method, it just has to restore an amplitude signal, i.e., B(t), from the reception signal. Three methods of restoring B(t) from the reception signal will now be described.

Method 1: restoring only B(t) from $I_{LPF}(t)$. To satisfy Method 1, the following Equation 8 is considered.

$$I_{LPF}(t) = \frac{A(t)\cos(\delta-\Phi_1)}{2} + \frac{B(t)\cos(\delta-\Phi_2)}{2}$$

$$= 0 + \frac{B(t)\cos(\delta-\Phi_2)}{2} \quad \dots(8)$$

To satisfy Equation 8, $\cos(\delta-\Phi_1) = 0$ should be satisfied. Thus, Equation 9 must be satisfied.

$$\delta = 90^o + \Phi_1 \text{ or } \delta = -90^o + \Phi_1 \quad \dots(9)$$

When Equation 9 is satisfied, the restored B(t) is as follows.

$$I_{LPF}(t) = \pm \frac{B(t)\sin(\Phi_2-\Phi_1)}{2} \quad \dots(10)$$

Method 2: restoring only B(t) from $Q_{LPF}(t)$. To satisfy Method 2, the following Equation 11 is considered.

$$Q_{LPF}(t) = \frac{A(t)\sin(\delta\text{-}\Phi_1)}{2} + \frac{B(t)\sin(\delta\text{-}\Phi_2)}{2}$$

$$= \quad 0 \quad + \quad \frac{B(t)\sin(\delta\text{-}\Phi_2)}{2} \qquad \ldots(11)$$

To satisfy Equation 11, $\sin(\delta\text{-}\Phi_1) = 0$ should be satisfied. Therefore, Equation 12 must be satisfied.

$$\delta = 0^o + \Phi_1 \text{ or } \delta = 180^o + \Phi_1 \qquad \ldots(12)$$

When Equation 9 is satisfied, the restored B(t) is as follows.

$$Q_{LPF}(t) = \pm \frac{B(t)\sin(\Phi_2\text{-}\Phi_1)}{2} \qquad \ldots(13)$$

Method 3: restoring B(t) by synthesizing $I_{LPF}(T)$ and $Q_{LPF}(t)$. To satisfy Method 3, the following Equation 14 is considered.

$$I_{LPF}(t) + Q_{LPF}(t) = \frac{A(t)}{2}\left[\cos(\delta\text{-}\Phi_1) + \sin(\delta\text{-}\Phi_1)\right] + \frac{B(t)}{2}\left[\cos(\delta\text{-}\Phi_2) + \sin(\delta\text{-}\Phi_2)\right]$$

$$= \quad 0 \quad + \quad \frac{B(t)}{2}\left[\cos(\delta\text{-}\Phi_2) + \sin(\delta\text{-}\Phi_2)\right] \qquad \ldots(14)$$

To satisfy Equation 14, it should be true that $\cos(\delta\text{-}\Phi_1) = -\sin(\delta\text{-}\Phi_1)$. Therefore, Equation 15 must be satisfied.

$$\delta = -45^o + \Phi_1 \text{ or } \delta = 135^o + \Phi_1 \qquad \ldots(15)$$

When Equation 9 is satisfied, the restored B(t) is as follows.

$$I_{LPF}(t) + Q_{LPF}(t) = \pm \frac{B(t)\sin(\Phi_2\text{-}\Phi_1)}{\sqrt{2}} \qquad \ldots(16)$$

When the three methods described above are used, the amplitude signal B(t) can be restored.

As described above, a receiver of an RFID reader, which eliminates a leakage signal, further includes a phase adjustment unit. The phase adjustment unit adjusts an LO signal to have a phase difference of a predetermined angle from the leakage signal. Therefore, only the leakage signal can be effectively eliminated from a reception signal.

Generally, a phase of a desired signal changes constantly in an electromagnetic wave environment. Thus, the phase of the signal must be adjusted constantly. However, in the present invention, since a leakage signal is generated in the same circuit, there is no time change in the phase. In addition, once the phase of the signal is adjusted to the leakage signal, there is no need to adjust the phase of the signal again. Hence, the leakage signal is effectively eliminated.

While the present invention has been particularly shown and described with reference to exemplary embodiments thereof, it will be understood by those of ordinary skill in the art that various changes in form and details may be made therein without departing from the spirit and scope of the present invention as defined by the following claims.

**Claims**

1.  A receiver of a radio frequency identification (RFID) reader, which eliminates a leakage signal from a reception signal comprised of a RFID tag response signal and the leakage signal, the receiver comprising:

    a phase adjustment unit adjusting a local oscillation signal received from a frequency synthesizer to have a phase difference of a predetermined angle from the leakage signal;
    a phase displacement unit comprising an I displacer and a quadrature (Q) displacer generating an in-phase (I-phase) signal and a Q-phase signal having a phase difference of 90 degrees from the phase-adjusted local oscillation signal, respectively;
    a frequency downward mixing unit comprising a first frequency downward mixer frequency-downward-mixing the I-phase signal generated by the I displacer with the reception signal and a second frequency downward mixer frequency-downward-mixing the Q-phase signal generated by the Q displacer with the reception signal; and
    a filtering unit comprising a first filter filtering a signal received from the first frequency downward mixer and eliminating the leakage signal from the reception signal and a second filter filtering a signal received from the second frequency downward mixer and eliminating the leakage signal from the reception signal.

2.  The receiver of claim 1, further comprising a switch unit determining whether to transmit the reception signal to the frequency downward mixing unit directly or via a low noise amplifier according to a control signal generated based on an intensity of the reception signal.

3.  The receiver of claim 2, wherein the switch unit diverts the reception signal directly to the frequency downward mixing unit if the intensity of the reception signal is greater than a predetermined level.

4.  The receiver of claim 2, wherein the switch unit diverts the reception signal to the low noise amplifier amplifying the reception signal if the intensity of the reception signal is less than the predetermined level, and the low noise amplifier transmits the amplified reception signal to the frequency downward mixing unit.

5.  The receiver of claim 2, 3 or 4, further comprising a digital unit generating a control signal for controlling the reception signal to be transmitted directly to the frequency downward mixing unit and transmitting the control signal to the switch unit if the intensity of the reception signal is greater than the predetermined level and generating a control signal for controlling the reception signal to be transmitted to the low frequency amplifier and transmitting the control signal to the switch unit if the intensity of the reception signal is less than the predetermined level.

6.  The receiver of one of claims 1 to 5, wherein the phase adjustment unit adjusts the local oscillation signal to have a phase difference of 0 or 180 degrees from the leakage signal.

7.  The receiver of one of claims 1 to 5, wherein the phase adjustment unit adjusts the local oscillation signal to have a phase difference of -90 or 90 degrees from the leakage signal.

8.  The receiver of one of claims 1 to 5, wherein the phase adjustment unit adjusts the local oscillation signal to have a phase difference of 45 or 135 degrees from the leakage signal.

9.  The receiver of one of claims 1 to 8, further comprising an operational amplifier amplifying a signal output from the filtering unit.

10. The receiver of one of claims 1 to 9, wherein the first and second filters are low pass filters.

# FIG. 1 (PRIOR ART)

RFID READER

RFID TAG

TRANSMISSION SIGNAL

ANTENNA

RF FILTER

DIRECTIONAL COUPLER

LEAKAGE SIGNAL

FREQUENCY SYNTHESIZER

TRANSMITTER

DIGITAL UNIT

RECEIVER

RFID TAG RESPONSE SIGNAL

EP 1 722 314 A1

## FIG. 2A (PRIOR ART)

TRANSMISSION
SIGNAL
$(S_T)$

1

$-\Delta$ $f_0$ $+\Delta$

## FIG. 2B (PRIOR ART)

LEAKAGE SIGNAL
$(S_L)$

2

$-\Delta$ $f_0$ $+\Delta$

## FIG. 2C (PRIOR ART)

RFID TAG
RESPONSE SIGNAL
$(S_R)$

3

4a

4b

$-\Delta$ $f_0$ $+\Delta$

FIG. 2D (PRIOR ART)

RECEPTION
SIGNAL
$(S_L + S_R)$

5

4a                    4b

$-\Delta$   $f_0$   $+\Delta$

FIG. 2E (PRIOR ART)

FILTERED
RECEPTION
SIGNAL
$(F(S_R))$

4b

$-\Delta$   $f_0$   $+\Delta$

WHEN LEAKAGE SIGNAL $S_L$ IS NOT RECEIVED

FIG. 2F (PRIOR ART)

FILTERED
RECEPTION
SIGNAL
$(F(S_L + S_R))$

4b

5a

$-\Delta$   $f_0$   $+\Delta$

WHEN LEAKAGE SIGNAL $S_L$ IS RECEIVED

FIG. 3

**EP 1 722 314 A1**

**European Patent Office**

**EUROPEAN SEARCH REPORT**

Application Number

EP 05 10 7633

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 6 603 391 B1 (GREEFF ROY ET AL) 5 August 2003 (2003-08-05) * column 10, line 32 - column 11, line 61; figure 7 * ----- | 1-10 | G06K7/00 |
| A | US 5 444 864 A (SMITH ET AL) 22 August 1995 (1995-08-22) * column 3, line 19 - line 48; figure 3 * ----- | 1-10 | |
| | | | TECHNICAL FIELDS SEARCHED (Int.Cl.7) |
| | | | G06K |

The present search report has been drawn up for all claims

| Place of search | Date of completion of the search | Examiner |
|---|---|---|
| The Hague | 14 October 2005 | Chiarizia, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 10 7633

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2005

| Patent document cited in search report | | Publication date | Patent family member(s) | Publication date |
|---|---|---|---|---|
| US 6603391 | B1 | 05-08-2003 | US 2004027240 A1 | 12-02-2004 |
| US 5444864 | A | 22-08-1995 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020050038375